# EUROPEAN PATENT APPLICATION

(11) **EP 4 790 799 A1**
(43) Date of publication of application: **12.08.2026**
(21) Application number: 25156207.0
(22) Date of filing: 06.02.2025
(51) Int. Cl.: H01M 10/658, H01M 50/209, H01M 50/24, H01M 50/591, H01M 10/613, H01M 10/625, H01M 50/204, H01M 50/271, H01M 50/296, H01M 50/548, H01M 50/55

(54) **BATTERY PACK TERMINAL DEFLECTORS**

(71) Applicant: Ford Global Technologies, LLC, Dearborn, MI 48126 (US)
(72) Inventor: COX, David, London, SE16 5XJ (GB); ETHERIDGE, Paul, Crowborough, TN6 2EA (GB); PETRIDIS, Themi, Bishop's Stortford, CM23 3NG (GB); STOTHARD, Christopher, Billericay, CM11 2DR (GB)
(74) Representative: HG Law International LLP

(57) **Abstract**

The present disclosure provides a battery pack comprising a plurality of battery arrays, each battery array having at least one terminal and a terminal cover associated with the terminal. The terminal cover comprises a mounting portion and a deflector portion. The mounting portion is configured to affix the terminal cover to the battery array such that the terminal cover is substantially aligned with the terminal. The deflector portion is positioned with respect to the terminal such that, in an event of fluid egress from a battery array via a terminal of the battery array, the fluid egress is directed away from predefined locations of the other respective battery arrays of the battery pack. The terminal cover (100) may include a sidewall (125) and a top portion (115).

## Description

### FIELD OF INVENTION

The present disclosure relates to battery pack terminal covers, and more particularly to a terminal cover, battery pack, and method for managing fluid flow and protecting sensitive components in a battery pack.

### BACKGROUND

Battery packs for electric vehicles typically consist of multiple battery arrays, each containing numerous individual battery cells. These battery packs are designed to provide high voltage and high capacity energy storage to power the vehicle's electric drivetrain. The battery arrays are interconnected and include various terminals, connectors, and other components to facilitate power distribution and control.

In some cases, gases and other fluids may be rapidly released from a cell. This sudden release of hot gases can potentially impact the performance of nearby components or adjacent cells. In some cases, the released gases may contain conductive particles and be highly flammable, posing risks of electrical short circuits or fire if not properly managed.

It may be advantageous to reduce the likelihood of array to array propagation, i.e., thermal propagation from one array to the next due to the heat release from an array, and aspects of the present disclosure may limit or delay array to array propagation.

### SUMMARY OF INVENTION

This Summary is provided to introduce a selection of concepts in a simplified form that are further described below in the Detailed Description.

In a first aspect, a battery pack is provided. The battery pack comprises a plurality of battery arrays, the battery arrays having at least one terminal and a terminal cover associated with the or each terminal, wherein: the terminal cover comprises a mounting portion and a deflector portion; the mounting portion is configured to affix the terminal cover to the battery array such that the terminal cover is substantially aligned with the terminal; and the deflector portion is positioned with respect to the terminal such that, in an event of fluid egress from a battery array via a terminal of the battery array, the fluid egress is directed away from predefined locations of the other respective battery arrays of the battery pack.

This configuration provides enhanced performance of battery packs, e.g., by directing fluid egress away from components of other battery arrays.

The deflector portion may comprise at least a part of a sidewall of the terminal cover.

Incorporating the deflector portion into the sidewall of the terminal cover allows for efficient use of space within the battery pack while effectively redirecting fluid egress.

The predefined locations may be terminals of the other respective battery arrays of the battery pack.

By directing fluid egress away from the terminals of other battery arrays, this feature helps prevent electrical short circuits and potential thermal runaway events in adjacent arrays.

The predefined locations may be busbars of the other respective battery arrays of the battery pack. In some examples, the other terminals, connectors, and battery control modules, electric control modules, and/or energy control modules may be the predefined locations.

Protecting busbars from fluid egress helps maintain the electrical integrity of the battery pack.

The deflector portion may comprise a sidewall and a top portion.

This configuration creates a more comprehensive barrier to fluid egress, providing enhanced protection for components within the battery pack.

The terminal may be a high voltage terminal.

Applying the terminal cover to high voltage terminals offers protection for electrical connections within the battery pack.

The terminal may be a low voltage terminal.

Protecting low voltage terminals ensures the integrity of control and monitoring systems within the battery pack.

The or each terminal cover may be formed of metal.

Metal construction provides durability and heat resistance, enhancing the protective capabilities of the terminal cover.

The or each terminal cover may include a mica layer.

The addition of a mica layer enhances the thermal insulation properties of the terminal cover, further protecting sensitive components from heat generated during fluid egress events.

The or each terminal cover may be formed of mica.

Constructing the entire terminal cover from mica provides excellent thermal insulation and electrical isolation properties.

Each terminal cover may be formed as part of a top surface of the respective battery array.

Integrating the terminal cover into the top surface of the battery array creates a streamlined design that maximizes space efficiency within the battery pack.

Each array of the plurality of the arrays may comprise two or more terminals, with each terminal of each array including a terminal cover.

This comprehensive coverage ensures that all terminals within the battery pack are protected, maximizing overall system performance.

The deflector portion of each terminal of each array may be positioned with respect to each terminal such that, in the event of fluid egress from a battery array via a terminal of the battery array, the fluid egress is directed away from predefined locations of the battery array.

This configuration provides localized protection within each battery array, preventing fluid egress from affecting other components within the same array.

The predetermined locations of the battery array may be busbars or the other terminal or terminals of the battery array.

By protecting both busbars and other terminals within the same array, this feature helps maintain the integrity of individual battery arrays.

In a second aspect, a vehicle comprising the battery pack of the first aspect is provided.

Incorporating the battery pack design as disclosed herein into a vehicle enhances the overall safety and reliability of electric and hybrid electric vehicles, potentially increasing consumer confidence and adoption of these technologies.

### BRIEF DESCRIPTION OF FIGURES

Embodiments of the invention will be described, by way of example, with reference to the following drawings, in which:
FIG. 1A-1B illustrate isometric views of terminal covers, according to aspects of the present disclosure.
FIG. 2 illustrates an isometric view of another terminal cover, according to aspects of the present disclosure.
FIG. 3 illustrates a top view of a battery pack comprising multiple battery arrays, according to aspects of the present disclosure.
FIG. 4 illustrates an isometric view of a battery array, according to aspects of the present disclosure.
FIG. 5 illustrates an isometric view of a battery array cover assembly, according to aspects of the present disclosure.
FIG. 6 illustrates a side view outline of a vehicle with a battery pack, according to aspects of the present disclosure.

Common reference numerals are used throughout the figures to indicate similar features.

### DETAILED DESCRIPTION

In some examples, a battery pack includes a plurality of battery arrays. The battery arrays may have at least one terminal. A terminal cover may be associated with each terminal.

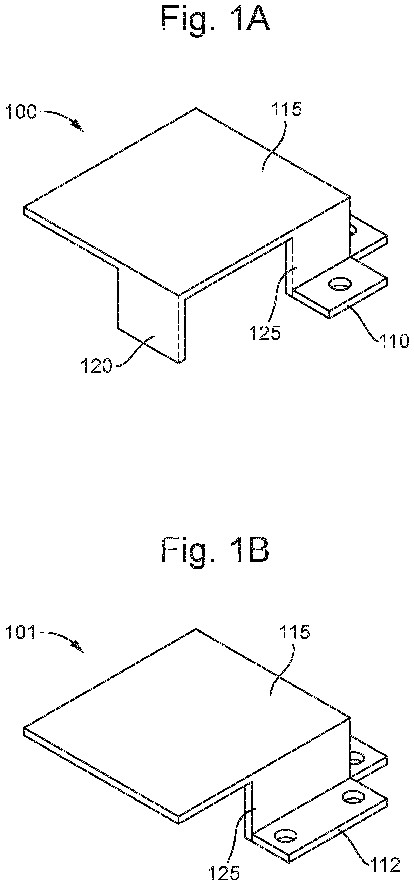

FIG. 1A-1B illustrate examples of terminal covers. A terminal cover 100 comprises a mounting portion 110 and a deflector portion 120. The mounting portion 110 is configured to affix the terminal cover 100 to a battery array such that the terminal cover 100 is substantially aligned with a terminal.

The deflector portion 120 may comprise at least a part of a sidewall 125 of the terminal cover 100. In some examples, the deflector portion 120 comprises a sidewall 125 and a top portion 115. The deflector portion 120 may have openings specifically designed to manage venting gas. The deflector portion 120 may also have closed wall areas to reduce the overall temperature of components driven by venting gas.

The deflector portion 120 is positioned with respect to the terminal to direct fluid egress away from predefined locations in the event of fluid egress from a battery array via a terminal. The deflector portion 120 may prevent venting directly upwards into a battery pack cover. The deflector portion 120 may create gas 'shadows' to protect components or areas from hot venting gas. Additionally, the deflector portion 120 may act as a physical barrier to hot particles and conductive debris.

In some examples, the terminal cover 100 is formed of metal. The terminal cover 100 may include a mica layer. Alternatively, the terminal cover 100 may be made out of metal with mica affixed onto it.

A terminal cover 101, as shown in FIG. 1B, may have a similar structure to the terminal cover 100, comprising a mounting portion 112 and a deflector portion 120. The mounting portion 112 may be configured to affix the terminal cover 101 to a battery array in a manner similar to the terminal cover 100.

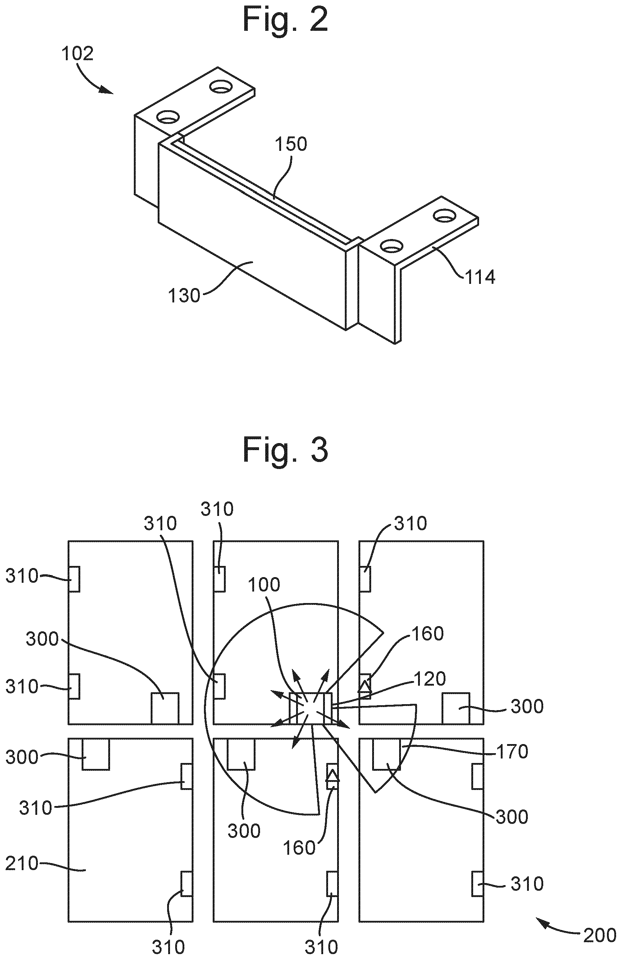

FIG. 2 illustrates an alternative terminal cover design. A terminal cover 102 comprises a deflector portion 130, mounting portions 114, and a silicate portion 150. The terminal cover 102 differs from the terminal covers 100, 101 shown in FIG. 1A-1B in several aspects.

The deflector portion 130 of the terminal cover 102 takes an elongated, rectangular structure forming the main body of the terminal cover 102. The deflector portion 130 is designed to direct fluid flow in a specific manner, positioned to direct gas flow from a terminal of a battery array in a predetermined direction.

The terminal cover 102 includes mounting portions 114 at each end of the deflector portion 130. The mounting portions 114 are configured for fastening the terminal cover 102 to other components, such as a battery array or a battery cover.

One feature of the terminal cover 102 is the silicate portion 150. The silicate portion 150 extends along the length of the deflector portion 130. The silicate portion 150 may be made from mica and may provide additional protection or insulation for the components beneath the terminal cover 102.

The terminal cover 102 may be formed as part of a top surface of a respective battery array. This integration may provide a more streamlined design and potentially enhanced protection for the battery array components.

The elongated design of the terminal cover 102 may allow for coverage of a larger area compared to the terminal covers 100, 101 shown in FIG. 1A-1B. The inclusion of the silicate portion 150 may provide enhanced thermal protection and electrical insulation. The positioning of the mounting portions 114 at the ends of the terminal cover 102 may allow for more secure attachment to the battery array or battery cover.

In general, terminal covers may comprise deflector portions 120, 130 and sidewalls 125. In some examples, the terminal covers may also include a top portion 115. In some examples, the terminal covers may not include a top portion 115.

FIG. 3 illustrates a top view of a battery pack 200. The battery pack 200 comprises a plurality of battery arrays 210. In the example shown, the battery pack 200 includes six rectangular battery arrays 210 arranged in two rows of three.

Each battery array 210 is equipped with a low voltage terminal 300 positioned near one corner and a high voltage terminal 310 located at the opposite corner. The low voltage terminal 300 and the high voltage terminal 310 may be used for electrical connections within the battery pack 200.

A terminal cover 100 is positioned in the center of the battery pack 200, specifically on the middle battery array 210 of the upper row. The terminal cover 100 includes the deflector portion 120, which is represented by a small rectangular shape.

Surrounding the terminal cover 100 is a circular shaded area indicating a fluid flow 170. The fluid flow 170 is depicted by multiple arrows radiating outward from the terminal cover 100, illustrating the direction of fluid dispersion. The deflector portion 120 of the terminal cover 100 is positioned to direct the fluid flow 170 away from predefined locations of other battery arrays 210. In some cases, the fluid flow may be hot fluid or gases flowing out of a battery array 210, and terminal cover 100 may be shaped to deflect the fluid flow.

The diagram also highlights regions to be protected 160, adjacent to the terminal cover 100. These regions to be protected 160 are positioned on either side of the deflector portion 120. The regions to be protected 160 may include busbars or other terminals of the respective battery arrays 210.

In some examples, each array of the plurality of battery arrays 210 comprises two or more terminals. Each terminal of each battery array 210 may include a terminal cover 100. The deflector portion 120 of each terminal cover 100 may be positioned with respect to each terminal such that, in the event of fluid egress from a battery array 210 via a terminal, the fluid egress is directed away from predefined locations of the battery array 210.

The predefined locations of the battery array 210 may be busbars or other terminals of the battery array 210. By directing fluid egress away from these predefined locations, the terminal covers 100 help protect components within the battery pack 200 from being affected by fluid egress.

In some exemplary scenarios, an array may vent via HV terminal, providing fluid egress. In such an example, the terminal cover and deflector may protect adjacent arrays if the array to which it is affixed to is the venting array.

In some exemplary scenarios, an array to which the terminal cover and deflector is attached may be a "victim" array, subject to fluid egress from an adjacent problem array, and the terminal cover and deflector may protect the HV terminal and any plastic over moulding of the HV terminal from the fluid egress flow.

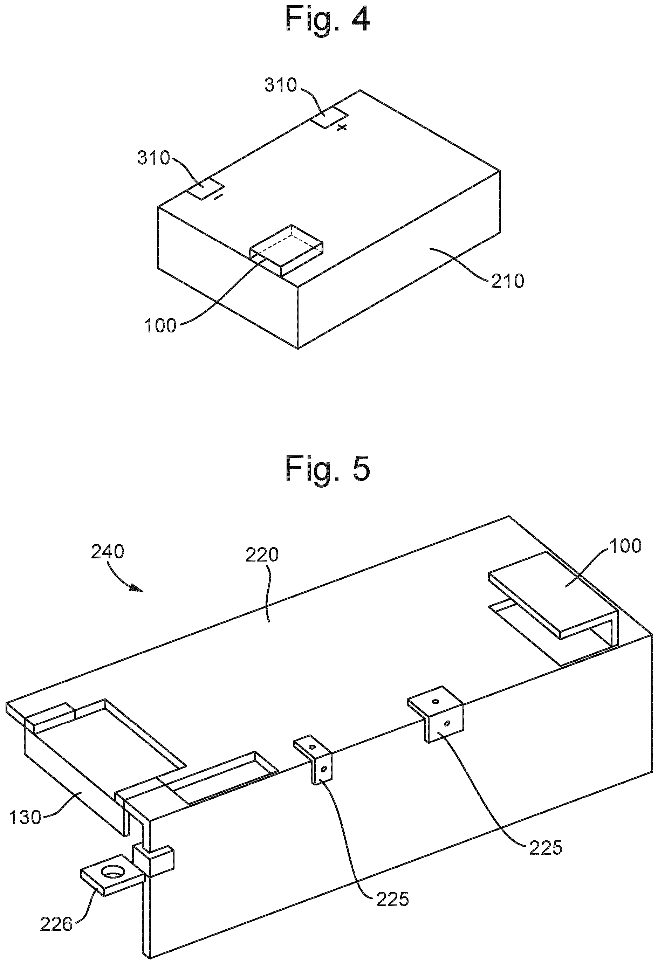

FIG. 4 illustrates an isometric view of a battery array 210. The battery array 210 is depicted as a rectangular prism with several components visible on its surface.

The battery array 210 includes two high voltage terminals 310 positioned at opposite corners of its top surface. The high voltage terminals 310 are represented by small rectangular shapes, with one terminal marked by a "+" symbol and the other by a "-" symbol, indicating positive and negative polarities respectively. These high voltage terminals 310 may be used for electrical connection to the battery pack 200.

A terminal cover 100 is visible on one side of the battery array 210. The terminal cover 100 is shown as a rectangular structure protruding from the side surface of the battery array 210. The terminal cover 100 is positioned near the edge of the battery array 210, and may provide protection or access to internal components.

The placement of the high voltage terminals 310 and the terminal cover 100 on the battery array 210 provides an arrangement of features that allows for electrical connections while potentially providing protection for internal components. This configuration may contribute to the overall design and functionality of the battery pack 200.

In some examples, the terminal cover 100 may include a deflector portion 120 and a mounting portion 110. The deflector portion 120 of the terminal cover 100 may be positioned to direct fluid flow away from sensitive areas of the battery array 210 or adj acent battery arrays in the event of fluid egress.

The high voltage terminals 310 and the terminal cover 100 are arranged on the battery array 210 in a manner that may facilitate efficient electrical connections while providing protection against potential fluid egress or other environmental factors. This configuration may contribute to the overall performance of the battery pack 200.

FIG. 5 illustrates an isometric view of a battery array cover assembly 240. The battery array cover assembly 240 includes several components designed to manage fluid flow and protect sensitive components of a battery array or battery pack.

The battery array cover assembly 240 includes a terminal cover 100 positioned at one end of the assembly. The terminal cover 100 is configured to protect and cover a terminal connection point of a battery array.

At the opposite end of the battery array cover assembly 240 from the terminal cover 100, a deflector portion 130 is provided. The deflector portion 130 has a larger, open-box structure with raised sides. The deflector portion 130 is designed to direct fluid flow away from certain areas of the battery array.

The battery array cover assembly 240 is formed from a silicate sheet 220. The silicate sheet 220 forms the length of the assembly, providing a protective layer over the battery array surface. In some examples, the silicate sheet 220 may be formed of mica. The silicate sheet 220 may cover the end plates of each array in the center of the battery pack, providing additional protection and insulation.

In some examples, the battery array cover assembly 240 is formed of two pieces of the silicate sheet 220. The two pieces of the silicate sheet 220 may be fixed together with brackets 225. The brackets 225 are positioned along the length of the silicate sheet 220 and may provide structural support to the assembly. In some examples, the battery array cover assembly 240 may be formed of a single piece shaped so as to cover two opposing battery arrays.

A mounting portion 226 is formed as part of the battery array cover assembly 240. The mounting portion 226 is configured for attachment purposes, allowing the battery array cover assembly 240 to be securely fastened to a battery array or battery pack.

The arrangement of the terminal cover 100, the deflector portion 130, and the silicate sheet 220 in the battery array cover assembly 240 creates a system for directing potential fluid egress away from sensitive areas while providing overall protection to the battery array. The terminal cover 100 protects the terminal connection point, while the deflector portion 130 manages fluid flow. The silicate sheet 220 provides a protective and insulating layer over the battery array surface.

In some examples, the protective and insulating layer provided by the silicate sheet 220 may be the end plate of the array in the central portion of the battery.

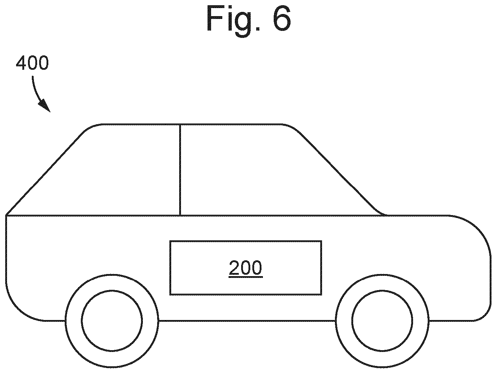

FIG. 6 illustrates a side view outline of a vehicle 400. A battery pack 200 is positioned in the middle of the vehicle 400 body.

The battery pack 200 may be incorporated into the vehicle 400 in a manner that optimizes space utilization and weight distribution. The positioning of the battery pack 200 in the middle of the vehicle 400 may contribute to the overall balance and stability of the vehicle 400.

In some examples, the battery pack 200 may include multiple battery arrays, each battery array having at least one terminal and a terminal cover associated with each terminal. The terminal covers may include deflector portions positioned to direct fluid egress away from predefined locations in the event of fluid egress from a battery array via a terminal.

The integration of the battery pack 200 into the vehicle 400 may involve considerations of safety, performance, and efficiency. The positioning of the battery pack 200 may affect the vehicle's center of gravity, handling characteristics, and overall design.

In some examples, the battery pack 200 may be designed to fit within a specific compartment or area of the vehicle 400. This integration may involve considerations of thermal management, electrical connections, and accessibility for maintenance or replacement.

The incorporation of the battery pack 200 into the vehicle 400 may be a key aspect of electric vehicle design, affecting factors such as driving range, charging capabilities, and overall vehicle performance.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A battery pack comprising a plurality of battery arrays, the battery arrays having at least one terminal and a terminal cover associated with the or each terminal, wherein:
the terminal cover comprises a mounting portion and a deflector portion;
the mounting portion is configured to affix the terminal cover to the battery array such that the terminal cover is substantially aligned with the terminal; and
the deflector portion is positioned with respect to the terminal such that, in an event of fluid egress from a battery array via a terminal of the battery array, the fluid egress is directed away from predefined locations of the other respective battery arrays of the battery pack.

2. The battery pack of claim 1, wherein the deflector portion comprises at least a part of a sidewall of the terminal cover.

3. The battery pack of claim 1 or claim 2, wherein the predefined locations are terminals of the other respective battery arrays of the battery pack.

4. The battery pack of claim 1 or claim 2, wherein the predefined locations are busbars of the other respective battery arrays of the battery pack.

5. The battery pack of any preceding claim, wherein the deflector portion comprises a sidewall and a top portion.

6. The battery pack of any preceding claim, wherein the terminal is a high voltage terminal.

7. The battery pack of any preceding claim, wherein the terminal is a low voltage terminal.

8. The battery pack of any preceding claim, wherein the or each terminal cover is formed of metal.

9. The battery pack of claim 8, wherein the or each terminal cover includes a mica layer.

10. The battery pack of any one of claims 1-7, wherein the or each terminal cover is formed of mica.

11. The battery pack of any one of claims 1-9, wherein each terminal cover is formed as part of a top surface of the respective battery array.

12. The battery pack of any preceding claim, wherein each array of the plurality of the arrays comprises two or more terminals, with each terminal of each array including a terminal cover.

13. The battery pack of claim 12, wherein the deflector portion of each terminal of each array is positioned with respect to each terminal such that, in the event of fluid egress from a battery array via a terminal of the battery array, the fluid egress is directed away from predefined locations of the battery array.

14. The battery pack of claim 13, wherein the predetermined locations of the battery array are busbars or the other terminal or terminals of the battery array.

15. A vehicle comprising the battery pack of any one of claims 1-14.
